(19) **Europäisches Patentamt**

**European Patent Office**

**Office européen des brevets**

(11) **EP 0 856 571 B1**

(12) **EUROPEAN PATENT SPECIFICATION**

(45) Date of publication and mention
of the grant of the patent:
**16.04.2003 Bulletin 2003/16**

(51) Int Cl.$^7$: **C09K 5/04**

(21) Application number: **98100645.5**

(22) Date of filing: **15.01.1998**

(54) **Process for producing mixed refrigerants**

Verfahren zur Herstellung gemischter Kältemittel

Procédé pour la production de mélanges de réfrigerants

(84) Designated Contracting States:
**GB**

(30) Priority: **31.01.1997 JP 1950197**

(43) Date of publication of application:
**05.08.1998 Bulletin 1998/32**

(73) Proprietor: **SHOWA DENKO KABUSHIKI KAISHA**
**Minato-ku, Tokyo (JP)**

(72) Inventors:
• **Kanno, Kiyomitsu**
**Minato-ku, Tokyo (JP)**
• **Haga, Toshio,**
**Showa Denko K.K. Kagakuhin Kenkyujo**
**Kawasaki-shi, Kanagawa (JP)**

(74) Representative: **Strehl Schübel-Hopf & Partner**
**Maximilianstrasse 54**
**80538 München (DE)**

(56) References cited:
**EP-A- 0 509 673        EP-A- 0 659 862**
**WO-A-92/11338        WO-A-92/11339**
**WO-A-93/09199**

• **DATABASE WPI Section Ch, Week 8742 Derwent**
**Publications Ltd., London, GB; Class J02, AN**
**87-294313 XP002074042 & JP 62 204 833 A (KAO**
**CORP)**

**Description**

BACKGROUND OF THE INVENTION

1. Field of the Invention

The present invention relates to a process for producing mixed refrigerants, by which it is possible to rapidly and efficiently produce mixed refrigerants with uniform compositions by the simple admixture of different types of refrigerant components in a tank or steel cylinder.

2. Description of the Related Art

Conventional refrigerants used for refrigerators or air conditioners are primarily refrigerants composed of single components such as dichlorodifluoromethane ($CCl_2F_2$, hereunder referred to as "CFCl2") or chlorodifluoromethane ($CHClF_2$, hereunder referred to as "HCFC22"). In recent years, however, production of chlorofluorocarbons (hereunder referred to as "CFCs") such as the aforementioned CFCl2 has been halted because of the problem of depletion of the ozone layer in the stratosphere. Mixed refrigerants have therefore been developed, which are mixtures of various refrigerant components other than CFCs, such as hydrochlorofluorocarbons (hereunder referred to as "HCFCs"), hydrofluorocarbons (hereunder referred to as "HFCs"), hydrocarbons (hereunder referred to as "HCs") and fluorocarbons (hereunder referred to as "FCs"), as substitute refrigerants for CFCl2.

HCFCs, such as HCFC22 mentioned above, while having a smaller ozone depleting potential compared to CFCs, are expected to experience an increase in volume of use and thus, for future concerns, restrictions have been placed on their international gross output with an aim toward their abolition by the year 2020. Because HCFC22 in particular is widely used in air conditioners and the like, development of an alternative refrigerant has become a serious issue. No substance has yet been found which can be substituted directly in HCFC22-employing devices as a single component alternative refrigerant for HCFC22, and therefore at the present time the most promising candidates are mixed refrigerants obtained by mixing different types of HFCs. For the same reason, research is also progressing on a wide variety of other mixed refrigerants, including mixed refrigerants of HFCs and HCs and even hydrofluoroethers (hereunder referred to as "HFEs"), fluoroethers (hereunder referred to as "FEs") and fluoroiodocarbons (hereunder referred to as "FICs").

Because these mixed refrigerants have simple compositions, none of them can be applied for all refrigerant uses, and therefore various types of mixed refrigerants are being employed which contain combinations of 2 or 3 components in different proportions for adjustment of the properties and performance to allow their application for different uses and devices. There is a need for production processes by which these diverse and versatile mixed refrigerants can be produced to meet demands, using simple and inexpensive equipment.

Present production processes for conventional mixed refrigerants include (1) a process whereby the desired components are mixed in the gas phase, and the gas mixture is pressurized and cooled for liquefaction and filled into a vessel, (2) a process whereby the desired components are introduced into a vessel in liquid form and kept until a uniform composition is obtained, (3) a process whereby the desired components are introduced into a vessel in liquid form and circulated and agitated with a pump circulation system, and (4) a process whereby the desired components are introduced into a stirrer-equipped vessel in liquid form and the contents are agitated with the stirrer.

All of these conventional production processes for mixed refrigerants, however, have their associated problems. Specifically, the gas phase mixing process (1), wherein the refrigerant components are gasified and mixed prior to repressurization and cooling, is impractical because of the large-scale equipment and massive energy requirements. The mixing process (2) employs simpler equipment but requires a long time for uniform admixture depending on the combination of the mixed components, and is therefore poorly suited to meet demands. The pump circulation process (3) and agitation process (4) both allow production to be accomplished within a short period, but the equipment is complex and costly due to the requirements for a pump or stirrer and accessory equipment including sealing means, and their application has therefore been difficult for various small-scale production, such as production of test refrigerants and production of mixed refrigerants using cooling tanks or cylinders employed at sites where the refrigerators are installed.

SUMMARY OF THE INVENTION

The present invention has been accomplished with the aim of overcoming these problems associated with the prior art, and its object is therefore is to provide a process, for producing mixed refrigerants, which allows a plurality of different refrigerant components to be easily mixed in a tank or cylinder for example, to obtain mixed refrigerants of uniform composition within a short time.

In order to achieve this object, the present invention provides a process for producing a mixed refrigerant by which 2 or more different refrigerant components in liquid form are successively introduced into a vessel at or near its bottom to produce a mixed refrigerant, which process comprises selecting the order of introduction of the refrigerant components (groups) so that the liquid density of the refrigerant component (group) to be introduced later is lower at the introduction temperature than the liquid density of the refrigerant component (group) already introduced into the vessel, and introducing the subsequently introduced refrigerant component (group) into the liquid phase of the already introduced refrigerant component (group). Here, "refrigerant component (group)" refers to either one type of refrigerant component or a mixture of 2 or more refrigerant components.

The aforementioned refrigerant components (groups) are preferably one or more selected from the group consisting of HCFCs (hydrochlorofluorocarbons), HFCs (hydrofluorocarbons), HCs (hydrocarbons), FCs (fluorocarbons), HFEs (hydrofluoroethers), FEs (fluoroethers) and FICs (fluoroiodocarbons).

The present invention further provides a process for producing a mixed refrigerant wherein a mixed refrigerant composed of 3 different refrigerant components is produced by successively introducing any 2 components selected from the group consisting of difluoromethane (hereunder referred to as "HFC32"), 1,1,1-trifluoroethane (hereunder referred to as "HFC143a") and pentafluoroethane (hereunder referred to as "HFC125"), with 1,1,1,2-tetrafluoroethane (hereunder referred to as "HFC134a") in liquid form into a vessel at or near its bottom, which process comprises selecting the order of introduction of the refrigerant components so that among the 2 different refrigerant components introduced at the initial stage, the liquid density of the latter refrigerant component to be introduced is lower at the introduction temperature than the liquid density of the refrigerant component already introduced into the vessel, selecting the vapor pressure of the last refrigerant component to be introduced thereafter so that it is higher at the introduction temperature than the vapor pressure of the liquid phase of the refrigerant component group already introduced into the vessel, with the subsequent refrigerant components (groups) being introduced into the liquid phase of the already introduced refrigerant components (groups).

The refrigerant components (groups) are preferably introduced into the vessel through 2 or more openings or porous fine holes. During or after introduction of the refrigerant components (groups), the liquid phase in the vessel may be agitated using a pump circulator or stirrer.

BRIEF DESCRIPTION OF THE DRAWINGS

Fig. 1(a) is a cross-sectional view showing an embodiment of a vessel used to carry out the invention, and Fig. 1(b) is a perspective view of its refrigerant component inlet member.

Fig. 2(a) is a cross-sectional view showing another embodiment of a vessel used to carry out the invention, and Fig. 2(b) is a perspective view of its refrigerant component inlet member.

Fig. 3 is a cross-sectional view showing still another example of a vessel used to carry out the invention.

Fig. 4 is a cross-sectional view showing an example of a conventional vessel for production of mixed refrigerants.

Fig. 5 is a cross-sectional view showing another example of a conventional vessel for production of mixed refrigerants.

DESCRIPTION OF THE PREFERRED EMBODIMENTS

An embodiment of a process according to the first aspect of the invention will now be explained with reference to the drawings.

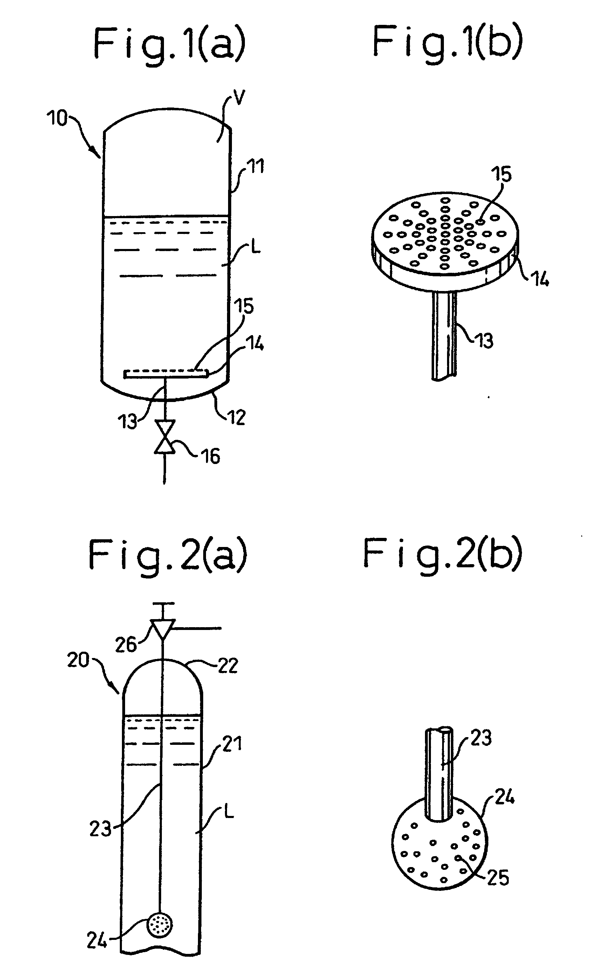

Fig. 1(a) and Fig. 1(b) show an embodiment of the invention. In Fig. 1(a), numeral 10 is a pressure sealed vessel (hereunder referred to simply as a "vessel"). Inserted in the vessel 10 is a liquid supply conduit 13 which passes through the bottom 12 of the vessel body 11, and the end of the liquid supply conduit 13 in the vessel body is connected to an inlet member 14 situated near the bottom 12. The end of the liquid supply conduit 13 outside the vessel body is connected to a refrigerant component storage container (not shown) via a valve 16.

The inlet member 14 is composed of a porous disk which is hollow inside and, as shown in Fig. 1(b), the bottom side thereof is connected to the liquid supply conduit 13 while the upper side opens into the vessel body 11 via a plurality of fine holes 15.

For production of mixed refrigerants to be used as products, 2 or more refrigerant components (groups) (hereunder referred to simply as "refrigerant components") to be mixed are successively introduced in liquid form into the vessel 10 through the valve 16, liquid supply conduit 13 and inlet member 14 in the order explained below. Here, the vessel is adjusted to a temperature which can sustain the liquid phase L of the refrigerant components introduced into the vessel body 11, preferably in the range of -100°C to 40°C.

For the introduction, first a prescribed amount of the refrigerant component with the highest liquid density at the introduction temperature is introduced into the vessel body 11. The inlet member 14 of the vessel is positioned so that after this first introduction of the refrigerant component the inlet member 14 is immersed in the liquid phase L of that refrigerant component.

The refrigerant component which is introduced first will hereunder be referred to as the first component, and the refrigerant components which are subsequently introduced thereafter will be referred to as the second component, third component, and so on.

After introduction of the first component, a prescribed amount of the second component is introduced into the vessel body 11. This second component has a liquid density $d_2$ at the introduction temperature which is lower than the liquid density $d_1$ of the liquid phase L of the first component already introduced into the vessel. That is, the order of introduction of the refrigerant components is selected so that, at the introduction temperature, the second component has a lower liquid density than the first component.

When a third component is to be mixed therewith, a prescribed amount thereof is introduced into the vessel body 11 from the inlet member 14 in the same manner as the first and second components. The third component has a liquid density $d_3$ at the introduction temperature which is lower than the liquid density $d_{(1+2)}$ of the mixed liquid phase L of the first and second components already introduced into the vessel. That is, the order of introduction of the refrigerant components is selected so that at the introduction temperature, the third component has a lower liquid density than the liquid density of the liquid phase L of the refrigerant components already introduced into the vessel. The same applies if a fourth component is to be mixed therewith.

According to the mixed refrigerant production process described above, the order of introduction of the refrigerant components is selected in such a manner that the liquid density $d_n$ of any refrigerant component to be introduced afterwards is lower at the introduction temperature than the liquid density $d_m$ of the liquid phase L of the refrigerant components already introduced into the vessel, and thus since the refrigerant component to be introduced afterwards is finely divided by the plurality of fine holes 15 of the inlet member 14 situated near the bottom 12 of the vessel body when introduced into the liquid phase L which has already been introduced into the vessel, the finely divided refrigerant component flows upward in the liquid phase L and mixes with the liquid phase L while forming a circulating fluid, to allow efficient formation of a uniform mixed refrigerant without powered stirring.

Because this mixed refrigerant production process simply accomplishes successive introduction of refrigerant components in a selected order into a vessel 10 having an inlet member 14 near the bottom 12 of the vessel body, no special accessory equipment is necessary for the production process, and a uniform mixed refrigerant may be rapidly and easily prepared using a simple apparatus, regardless of the number of mixed components or the size of the production apparatus.

According to the aforementioned mixed refrigerant production process, the temperature of the liquid phase L already introduced into the vessel and/or the temperature of the refrigerant components to be introduced are appropriately adjusted depending on the order of introduction selected for the refrigerant components based on their liquid densities, so that the vapor pressure of each refrigerant component to be introduced will be higher than the vapor pressure of the liquid phase L already introduced into the vessel. By including this condition, the vapor pressure V in the vessel body 11 will be at a relatively negative pressure at the moment of introduction, thus making introduction possible by the vapor pressure difference alone, without requiring injection with gear pumps or the like, to allow a reduction in electrical energy consumption.

This first mixed refrigerant production process of the invention will now be explained in further detail.

According to the invention, the refrigerant components used are preferably selected from the group consisting of HCFCs, HFCs, HCs, FCs, HFEs, FEs and FICs.

As specific examples of HCFCs there may be mentioned, by their common names, HCFC22 ($CHClF_2$), HCFC123 ($CHCl_2CF_3$), HCFC124 ($CHClFCF_3$), HCFC141b ($CH_3CCl_2F$), HCFC142b ($CH_3CClF_2$), HCFC225ca ($CHCl_2CF_2CF_3$) and HCFC225cb ($CHClFCF_2CClF_2$).

As specific examples of HFCs there may be mentioned, by their common names, HFC23 ($CHF_3$), HFC32 ($CH_2F_2$), HFC41 ($CH_3F$), HFC134 ($CHF_2CHF_2$), HFC134a ($CH_2FCF_3$), HFC143a ($CH_3CF_3$), HFC125 ($CHF_2CF_3$), HFC161 ($CH_3CH_2F$), HFC227ea ($CF_3CHFCF_3$), HFC227ca ($CHF_2CF_2CF_3$), HFC236ca ($CHF_2CF_2CHF_2$), HFC236cb ($CH_2FCF_2CF_3$), HFC236ea ($CHF_2CHFCF_3$), HFC236fa ($CF_3CH_2CF_3$), HFC245ca ($CH_2FCF_2CHF_2$), HFC245fa ($CHF_2CH_2CF_3$), HFC245cb ($CH_3CF_2CF_3$) and HFC254cb ($CH_3CF_2CHF_2$).

As specific examples of HCs there may be mentioned, by their common names, HC170 ($CH_3CH_3$), HC290 ($CH_3CH_2CH_3$), HC600 ($CH_3CH_2CH_2CH_3$), HC600a (($CH_3)_2CHCH_3$), HC601 ($CH_3CH_2CH_2CH_2CH_3$), HC601a (($CH_3)_2CHCH_2CH_3$), HC601b (($CH_3)_4C$), HC-C270 (cyclic $-CH_2CH_2CH_2-$) and HC1270 ($CH_3CH=CH_2$).

As specific examples of FCs there may be mentioned, by their common names, FC218 ($CF_3CF_2CF_3$) and FC-C318 (cyclic $-CF_2CF_2CF_2CF_2-$).

As specific examples of HFEs there may be mentioned, by their common names, HFE134 ($CHF_2OCHF_2$), HFE143a ($CH_3OCF_3$), HFE125 ($CHF_2OCF_3$), HFE227ca2 ($CHF_2CF_2OCF_3$), HFE245cb2 ($CH_3CF_2OCF_3$).

As a specific example of an FE there may be mentioned, by its common name, FE116 ($CF_3OCF_3$) and FE-C318 (cyclic $-CF_2CF_2CF_2OCF_2-$).

As specific examples of FICs there may be mentioned, by their common names, FIC13I1 (CF$_3$I) and FIC115I1 (CF$_3$CF$_2$I).

The first process of the invention is preferably applied when at least 2 of any of the above-mentioned refrigerant components are mixed. It is not necessary for each component to be mixed successively, and a premixture of 2 or more of the components may be used as one of the refrigerant components (groups).

Each of the refrigerant components mentioned above has a unique liquid density which depends on the temperature, as a property at saturation vapor pressure. These liquid densities show a general tendency to become lower at higher temperatures, and the same is true of their mixed refrigerants. Table 1 gives liquid densities (kg/l, same hereunder) and vapor pressures (bar, same hereunder) for the above-mentioned typical refrigerant components at saturation vapor pressure and 25°C.

Table 1

| Refrigerant component | Liquid density (kg/l) | Vapor pressure (bar) |
|---|---|---|
| HCFC124 | 1.356 | 3.82 |
| HCFC22 | 1.191 | 10.44 |
| HCFC142b | 1.110 | 3.38 |
| HFC134a | 1.206 | 6.65 |
| HFC125 | 1.190 | 13.77 |
| HFC32 | 0.961 | 16.91 |
| HFC143a | 0.931 | 12.61 |
| HFC152a | 0.899 | 5.96 |
| HFC227ea | 1.387 | 4.57 |
| HC600 | 0.573 | 2.44 |
| HC600a | 0.551 | 3.50 |
| HC290 | 0.492 | 9.52 |
| FC218 | 1.323 | 8.80 |
| HFE134 | 1.371 | 2.10 |

According to the invention, for production of a mixed refrigerant containing any 3 individual refrigerant components from the list in Table 1 in prescribed proportions, at 25°C for example, the prescribed amount of the refrigerant component with the highest liquid density is first introduced into the vessel 10 as the first component. Next, the second component is selected as the refrigerant component which when mixed with the first component will give a mixture with a liquid density which is higher than the liquid density of the remaining component (third component), and a prescribed amount thereof is introduced into the vessel. Finally, the remaining refrigerant component is introduced into the vessel as the third component. Thus, the liquid density of the second component itself does not necessarily need to be higher than that of the third component.

Determination of the order of mixture will now be explained by way of concrete examples. The possibility of introduction by vapor pressure difference alone will also be discussed. These concrete examples, however, are not intended to restrict the invention in any way.

Concrete Example 1

Production of a 3-component mixed refrigerant with 3 different components, HFC134a, HFC125 and HFC32 mixed in a selected order into prescribed weight proportions at 25°C.

HFC134a, having the highest liquid density, is selected as the first component, but to determine the second and third components it is necessary to know the liquid densities of mixtures of HFC125 and HFC32 with the first component HFC134a. The liquid densities and vapor pressures for different mixing proportions of HFC134a and HFC32 are listed in Table 2, and the liquid densities and vapor pressures for different mixing proportions of HFC134a and HFC125 are listed in Table 3.

Table 2

| HFC134a/HFC32 | Liquid density (kg/l) | Vapor pressure (bar) |
|---|---|---|
| 100/0 | 1.206 | 6.65 |
| 95/5 | 1.192 | 7.51 |

Table 2   (continued)

| HFC134a/HFC32 | Liquid density (kg/l) | Vapor pressure (bar) |
|---|---|---|
| 75/25 | 1.135 | 10.46 |
| 50/50 | 1.071 | 13.25 |
| 25/75 | 1.014 | 15.37 |
| 5/95 | 0.973 | 16.73 |
| 0/100 | 0.961 | 16.91 |

Table 3

| HFC134a/HFC125 | Liquid density (kg/l) | Vapor pressure (bar) |
|---|---|---|
| 100/0 | 1.206 | 6.65 |
| 95/5 | 1.207 | 7.00 |
| 75/25 | 1.208 | 8.41 |
| 50/50 | 1.206 | 10.15 |
| 25/75 | 1.199 | 11.91 |
| 5/95 | 1.190 | 13.41 |
| 0/100 | 1.190 | 13.77 |

From Tables 2 and 3 it is seen that in the range where the mixing proportion of HFC32 is greater than 5% by weight, the liquid density of any HFC134a/HFC32 mixture is lower than that of HFC125 alone (1.190). On the other hand, with HFC134a/HFC125 mixtures, the liquid density of any such mixture is higher than the liquid density of HFC32 alone (0.961) across the entire range of mixing proportions. Thus, according to the invention the order of mixing is selected so that HFC125 is the second component and HFC32 is the third component.

In terms of vapor pressure, Tables 2 and 3 show that across the entire range of mixing proportions, the vapor pressures of the HFC134a/HFC125 mixtures are lower than the vapor pressure of HFC125 (13.77 bar), and also lower than the vapor pressure of HFC32 (16.91 bar). Thus, injection with a gear pump or the like is necessary when the first component HFC134a is introduced into the vessel, but when the second component HFC125 and the third-component HFC32 are introduced thereafter, the inside of the vessel is constantly at a negative relative pressure, and therefore the negative pressure situation provides the advantage of allowing the second and third components to be introduced into the vessel without consumption of additional energy for pump power, and at a constant temperature of 25°C.

Concrete Example 2

Production of a 3-component mixed refrigerant with HFC134a and a prepared mixture of HFC125/HFC32 mixed into prescribed proportions at 25°C.

In this case it is necessary to determine the first component by comparing the liquid density of HFC134a and the liquid density of the HFC125/HFC32 mixture. Table 4 shows the liquid densities and vapor pressures for different mixing proportions of HFC125/HFC32 mixtures and the liquid density and vapor pressure for HFC134a.

Table 4

| HFC125/HFC32 | Liquid density (kg/l) | Vapor pressure (bar) |
|---|---|---|
| 100/0 | 1.190 | 13.77 |
| 75/25 | 1.123 | 15.81 |
| 50/50 | 1.065 | 16.64 |
| 25/75 | 1.012 | 16.96 |
| 0/100 | 0.961 | 16.91 |
| HFC134a | 1.206 | 6.65 |

As Table 4 clearly shows, for this combination the liquid density across the entire range of mixing proportions for HFC125/HFC32 is lower than that of HFC134a. It is therefore concluded that HFC134a should be the first component. Also, when the introduction is carried out in this order, the vapor pressure of the HFC125/HFC32 mixture is higher than the vapor pressure of HFC134a across the entire range of mixing proportions, and therefore the inside of the vessel is at a negative relative pressure, allowing the mixture to be introduced into the vessel by the vapor pressure difference alone, without consumption of additional energy.

Concrete Example 3

Production of a 3-component mixed refrigerant with 3 different refrigerant components, FC218, HCFC22 and HC290 mixed into prescribed proportions at 25°C.

FC218, having the highest liquid density, is selected as the first component, but to determine the second and third components it is necessary to know the liquid densities of mixtures of HCFC22 and HC290 with the first component FC218.

The liquid densities and vapor pressures for different mixing proportions of FC218 and HC290 are listed in Table 5, and the liquid densities and vapor pressures for different mixing proportions of FC218 and HCFC22 are listed in Table 6.

Table 5

| FC218/HC290 | Liquid density (kg/l) | Vapor pressure (bar) |
|---|---|---|
| 100/0 | 1.323 | 8.80 |
| 95/5 | 1.174 | 9.21 |
| 75/25 | 0.920 | 9.76 |
| 50/50 | 0.717 | 9.77 |
| 25/75 | 0.585 | 9.65 |
| 5/95 | 0.510 | 9.54 |
| 0/100 | 0.492 | 9.52 |

Table 6

| FC218/HCFC22 | Liquid density (kg/l) | Vapor pressure (bar) |
|---|---|---|
| 100/0 | 1.323 | 8.80 |
| 95/5 | 1.310 | 9.75 |
| 75/25 | 1.272 | 11.74 |
| 50/50 | 1.257 | 12.18 |
| 25/75 | 1.228 | 11.73 |
| 5/95 | 1.199 | 10.77 |
| 0/100 | 1.191 | 10.44 |

From Tables 5 and 6 it is seen that in the range where the proportion of HC290 is greater than about 95/5 in terms of weight proportion of FC218/HC290, the liquid density of the mixture is lower than the liquid density of HCFC22 alone (1.191). On the other hand, with FC218/HCFC22 the liquid density of the mixture is higher than the liquid density of HF290 alone (0.492) across the entire range of mixing proportions, and therefore the order of mixing is selected so that HCFC22 is the second component and HC290 is the third component.

Tables 5 and 6 show that depending on the mixing proportion, the vapor pressure of the FC218/HCFC22 mixture is sometimes higher than the vapor pressure of the second component HCFC22 (10.44 bar) and higher than the vapor pressure of the third component HC290 (9.52 bar) in almost all cases; thus, since the inside of the vessel is at a positive relative pressure within these ranges, not only the first component but also the second and/or third components must be injected into the vessel with a gear pump or the like, or the system must be partially heated or cooled to achieve introduction by vapor pressure difference, or else introduction must be achieved by a combination of the two.

In cases where the third component HC290 is introduced by the vapor pressure difference, since the vapor pressure is 12.2 bar even if the temperature is raised to 35°C, for example, it will sometimes be impossible to achieve an adequate positive vapor pressure difference with respect to the FC218/HCFC22 mixture, depending on the mixing proportion. Another option is to cool the FC218/HCFC22 mixture to achieve a vapor pressure difference. The liquid densities and vapor pressures of mixtures cooled to 20°C are listed in Table 7.

Table 7

| FC218/HCFC22 | Liquid density (kg/l) | Vapor pressure (bar) |
|---|---|---|
| 100/0 | 1.351 | 7.66 |
| 95/5 | 1.338 | 8.52 |
| 75/25 | 1.297 | 10.29 |
| 50/50 | 1.280 | 10.67 |
| 25/75 | 1.249 | 10.26 |
| 5/95 | 1.219 | 9.40 |
| 0/100 | 1.210 | 9.10 |

However, in this case as well, it will sometimes be impossible to achieve a sufficient positive vapor pressure difference between the HC290 at 25°C (vapor pressure: 9.52 bar) and the FC218/HCFC22 mixture at 20°C, depending on the mixing proportion. If, for example, the FC218/HCFC22 mixture is cooled to 20°C, heating the HC290 to 35°C will produce a negative relative pressure in the vessel with respect to the third component HC290 across the entire range of mixing proportions, thus allowing the third component HC290 to be introduced into the vessel without power. Since the liquid density of HC290 is 0.476 at 35°C, the density difference with respect to the FC218/HCFC22 mixture also widens, and the improved mixing efficiency allows the mixed refrigerant to be obtained more rapidly.

Concrete Example 4

Production of a 3-component mixed refrigerant with 3 different refrigerant components, HFC134a, HFC143a and HFC125 mixed in a selected order in prescribed proportions at 25°C.
HFC134a, having the highest liquid density, is selected as the first component, but to determine the second and third components it is necessary to know the liquid densities of mixtures of HFC143a and HFC125 with the first component HFC134a. The liquid densities and vapor pressures for different mixing proportions of HFC134a and HFC143a are listed in Table 8. The liquid densities and vapor pressures for different mixing proportions of HFC134a and HFC125 have already been given in Table 3.

Table 8

| HFC134a/HFC143a | Liquid density (kg/l) | Vapor pressure (bar) |
|---|---|---|
| 100/0 | 1.206 | 6.65 |
| 95/5 | 1.190 | 7.03 |
| 75/25 | 1.128 | 8.47 |
| 50/50 | 1.057 | 10.03 |
| 25/75 | 0.992 | 11.42 |
| 5/95 | 0.943 | 12.45 |
| 0/100 | 0.931 | 12.61 |

From Table 8 it is seen that when the third component is HFC143a, its liquid density is lower than the liquid density of HFC125 (1.190) across almost the entire range for the mixing composition. In contrast, Table 3 shows that if HFC125 is the second component and HFC143a is the third component, the liquid density of the HFC134a/HFC125 mixture is higher than the liquid density of HFC143a alone (0.931) across the entire range of mixing proportions, and therefore the order of mixing is selected so that HFC125 is the second component and HFC143a is the third component.
Here, since the vapor pressure of the second component HFC125 is higher than that of the first component HFC134a and the vapor pressure of the mixture is generally lower than that of the third component HFC143a, it is possible to accomplish introduction by the vapor pressure difference alone without any pressurizing with a gear pump or the like, except for the introduction of the first component. However, in cases where the composition ratio of HFC125 is about 75% by weight or greater in the HFC134a/HFC125 mixture at the initial stage, a reverse vapor pressure difference is produced upon introduction of the third component HFC143a, and therefore the introduction must be accomplished by pressurization with a gear pump or the like, or by creating a vapor pressure difference through a heating and cooling procedure, or by a combination of the two. If the HFC143a is heated, the vapor pressure is 14.3 bar at 30°C, for example, and the resulting positive pressure difference allows introduction by vapor pressure difference while also lowering the liquid density to 0.91, thus further increasing the density difference and improving the mixing efficiency.

Concrete Example 5

Production of a 3-component mixed refrigerant of HFC134a, HFC143a and HFC125 at 25°C, using a premixture of HFC125 and HFC143a.

For reference in determining the mixing order in this case, the liquid densities and vapor pressures for different composition ratios of HFC143a/HFC125 mixtures, and the liquid density and vapor pressure of HFC34a, are listed in Table 9.

Table 9

| HFC125/HFC143a | Liquid density (kg/l) | Vapor pressure (bar) |
|---|---|---|
| 100/0 | 1.190 | 13.77 |
| 75/25 | 1.187 | 13.22 |
| 50/50 | 1.122 | 12.87 |
| 25/75 | 1.032 | 12.68 |
| 0/100 | 0.931 | 12.61 |
| HFC134a | 1.206 | 6.65 |

From Table 9 it is seen that the liquid density of HFC134a is higher than the liquid density of HFC143a/HFC125 mixtures across the entire range, and therefore the order of mixing is selected so that HFC134a is the first component and the HFC143a/HFC125 mixture is the second component.

Since the vapor pressure of the second component, the HFC143a/HFC125 mixture, is higher than that of the first component HFC134a across the entire range of composition ratios, the second component HFC143a/HFC125 mixture may be introduced by the vapor pressure difference alone, without requiring pressurized introduction with a gear pump or the like, except for introduction of the first component, thus providing an advantage in terms of energy.

Concrete Example 6

Production of a 2-component mixed refrigerant of HFC143a and HFC125 at 25°C.

In this case, based on Table 1, HFC125 which has the higher liquid density should be selected as the first component, and HFC143a which has the lower liquid density should be selected as the second component.

Table 1 shows that the vapor pressure of the first component HFC125 is 13.77 bar and that of the second component HFC143a is 12.61 bar, which results in a reverse vapor pressure difference, and therefore the introduction must be accomplished by pressurization with a gear pump or the like, by creating a vapor pressure difference through a heating and cooling procedure, or by a combination thereof.

If the second component HFC143a is heated, the vapor pressure is 14.3 bar at 30°C, for example, and the resulting positive pressure difference allows introduction without power, while the liquid density is also lowered to 0.91, thus further increasing the density difference and improving the mixing efficiency.

However, this mixed refrigerant is known to form a maximum azeotropic mixture or azeotropic-like mixture depending on the composition ratio, and since the vapor pressure in the vessel tends to fall below the vapor pressure of the refrigerant components themselves as mixing progresses, more rapid introduction is possible.

Concrete Example 7

Production of a 2-component mixed refrigerant of HFC32 and HFC125 at 25°C.

In this case, based on Table 1, HFC125 which has the higher liquid density should be selected as the first component, and HFC32 which has the lower liquid density should be selected as the second component.

Table 1 shows that the vapor pressure of the first component HFC125 is 13.77 bar and that of the second component HFC32 is 16.91 bar, which is a positive vapor pressure difference, and thus the introduction need not be carried out by pressurization with a gear pump or the like or by a heating and cooling procedure. However, this mixed refrigerant is known to form a minimum azeotropic mixture or azeotropic-like mixture depending on the composition ratio, and since the vapor pressure in the vessel tends to rise above the vapor pressure of the refrigerant components themselves as mixing progresses, if necessary the introduction must be accomplished by pressurization with a gear pump or the like, by creating a vapor pressure difference through a heating and cooling procedure, or by a combination thereof.

Concrete Example 8

Production of a 2-component mixed refrigerant of HFC134a and HC290 at 25°C.

In this case, based on Table 1, HFC134a which has the higher liquid density should be selected as the first component, and HC290 which has the lower liquid density should be selected as the second component.

Table 1 shows that the vapor pressure of the first component HFC134a is 6.65 bar and that of the second component HC290 is 9.52 bar, which is a positive vapor pressure difference, and thus the introduction need not be carried out by pressurization with a gear pump or the like or by a heating and cooling procedure. However, this mixed refrigerant is known to form a minimum azeotropic mixture or azeotropic-like mixture depending on the composition ratio, and since the vapor pressure in the vessel tends to rise above the vapor pressure of the refrigerant components themselves as mixing progresses, is necessary the introduction must be accomplished by pressurization with a gear pump or the like, by creating a vapor pressure difference through a heating and cooling procedure, or by a combination thereof.

Concrete Example 9

Production of a 2-component mixed refrigerant of HC290 and HC600a at 25°C.

In this case, based on Table 1, HC600a which has the higher liquid density should be selected as the first component, and HC290 which has the lower liquid density should be selected as the second component.

Table 1 shows that the vapor pressure of the first component HC600 is 3.5 bar and that of the second component HC290 is 9.52 bar, which is a positive vapor pressure difference, thus eliminating the need for pressurization with a gear pump or the like or a heating and cooling procedure, and therefore an advantage in terms of energy is provided.

Concrete Example 10

Production of a 2-component mixed refrigerant of HFC134a and HFC32 at 25°C.

In this case, based on Table 1, HFC134a which has the higher liquid density should be selected as the first component, and HFC32 which has the lower liquid density should be selected as the second component.

Table 1 shows that the vapor pressure of the first component HFC134a is 6.65 bar and that of the second component HFC32 is 16.91 bar, which is a positive vapor pressure difference, and therefore introduction may be accomplished by the vapor pressure difference alone, without requiring pressurization with a gear pump or the like or a heating and cooling procedure, thus providing an advantage in terms of energy.

According to the first process of the invention exemplified above, when introducing into the vessel the refrigerant component having a'lower liquid density at the introduction temperature than the density of the liquid phase already introduced, the refrigerant component to be introduced afterwards must be introduced into the liquid phase which has already been introduced into the vessel. The refrigerant component which has already been introduced into the liquid phase in the vessel produces an ascending current because of its low liquid density, and this creates a circulating flow of the liquid phase in the vessel, providing an agitating effect for easy dispersion of the refrigerant component in the liquid phase without necessarily requiring powered agitation, so that a uniform mixed refrigerant can be rapidly produced.

The refrigerant component to be introduced afterwards is preferably introduced at or near the bottom of the vessel. This extends the ascending flow path from the bottom of the vessel to the liquid level, thus increasing the dispersion effect and allowing a uniform mixed refrigerant to be obtained more rapidly.

In particular, the refrigerant component inlet member preferably comprises a porous body having at least 2 openings or having a plurality of fine holes. This will form 2 or more ascending currents in the liquid phase in the vessel, thus further enhancing the dispersion effect. From this viewpoint, it is even more preferable for the refrigerant component inlet member to be formed of a porous body with a plurality of fine holes. Such a porous body, as shown in Fig. 1(a) and Fig. 1(b), may be disk-shaped with a plurality of fine holes 15, or as shown in Fig. 2(a) and 2(b), it may be sphere-shaped with a plurality of fine holes 25.

In cases where the vessel is a relatively large stationary one, the refrigerant component inlet member is preferably, as shown by numeral 14 in Fig. 1(a) and 1(b), connected to the end of a liquid supply conduit 13 inserted near the bottom of the vessel body 11 from the bottom 12 via a valve 16.

On the other hand, in cases where the vessel is a relatively small transportable one such as a cylinder, as shown in Fig. 2(a) and 2(b), the vessel 20 may have a supply conduit 23 inserted in the top 22 of the vessel body 21 via a valve 26 and reaching to near the bottom of the vessel body, with an inlet member 24 made, for example, of a sphere-shaped porous body with a plurality of fine holes 25, at the end of the liquid supply conduit 23 inside the vessel.

In either case, the mixed refrigerant produced in the vessel may be removed through a separately provided outlet port (not shown). It may be removed through the liquid supply conduit 13 shown in Fig. 1(a) or the liquid supply conduit 23 shown in Fig. 2(a) by the internal pressure of the vessel, or with a gear pump (not shown).

The ambient temperature for carrying out the first process of the invention is not particularly restricted. The temperature need only be selected so that the different components of the mixed refrigerant can be mixed in liquid form and so that difference in liquid density and preferably the vapor pressure difference can be achieved according to the invention. In practice, the temperature of the liquid phase in the vessel and the introduced liquid components will preferably be selected in a range of from -100°C to 40°C. Temperatures of under -100°C are not preferred as the liquid components may solidify. Temperatures exceeding 40°C are not preferred because most refrigerant components are liquefied gases and will often be subject to legal restrictions for high pressure gases.

When carrying out the first process of the invention, a greater difference in the liquid densities of the liquid phase in the vessel and the refrigerant component to be introduced will of course improve the mixing efficiency, but there is no definite minimum since it will depend on selection of the refrigerant components to be mixed. In general, the process of the invention can be smoothly carried out so long as the difference in liquid densities is at least 0.01. For example, when HFC125 is mixed with HCF134a at 25°C, the liquid density of 1.206 for HFC134a and the liquid density of 1.190 for HFC125 gives a difference of 0.016, and this liquid density difference will allow satisfactory mixture without powered agitation.

According to the first process of the invention it is possible to accomplish efficient mixing of the refrigerant components without powered agitation with a stirrer or pump circulator, but in cases where the difference in the liquid densities of the liquid phase in the vessel and the refrigerant component to be introduced afterwards is exceptionally small, or in cases where a reverse vapor pressure difference is produced during the introduction, supplementary circulation or injection with a gear pump is preferably effected when necessary, and in cases where the vessel is particularly large, a stirrer may be installed to accomplish internal stirring with stirring flaps. Even if such supplementary powered agitation or powered injection is employed, introduction of the refrigerant components in the order as indicated by the present invention and adjustment of the vapor pressure during introduction by heating or cooling of the refrigerant components will allow the energy consumption as a whole to be reduced and shorten the time required for introduction.

An embodiment of a mixed refrigerant production process according to the second aspect of the invention will now be explained with reference to Fig. 1(a) and Fig. 1(b). According to this embodiment any 2 different refrigerant components, selected from the group consisting of HFC32, HFC143a and HFC125, are introduced with HFC134a in liquid form into a vessel to produce a mixed refrigerant comprising 3 different refrigerant components (hereunder referred to as "HFC134a mixed refrigerant"). The apparatus construction used here is the same type as shown in Fig. 1 (a) and Fig. 1(b).

For production of an HFC134a mixed refrigerant for use as a product, the 3 different refrigerant components to be mixed are successively introduced in liquid form into the vessel (pressure sealed vessel) 10 shown in Fig. 1(a) and Fig. 1(b) through the valve 16, liquid supply conduit 13 and inlet member 14 in the order explained below. Here, the interior of the vessel is adjusted to a temperature which can sustain the liquid phase L of the refrigerant components introduced into the vessel body 11, preferably in the range of -100°C to 40°C.

For the introduction, first a combination of the first component and second component of the refrigerant components to be mixed is selected so that the liquid density $d_2$ of the second component is lower than the liquid density $d_1$ of the first component at the introduction temperature, and the order of introduction of the 3 refrigerant components is also determined in such a manner that the vapor pressure $p_3$ of the remaining third component is higher at the introduction temperature than the vapor pressure $p_{(1+2)}$ of the liquid phase of the mixture which has already been introduced into the vessel. After introduction of the first component, the inlet member 14 composed of a porous body and situated at or near the bottom of the vessel is positioned so as to be inside the liquid phase L of the introduced refrigerant component.

According to this production process, the order of introduction of the refrigerant components is selected so that the liquid density $d_1$ of the first component is higher at the introduction temperature than the liquid density $d_2$ of the second component, with the selection also made so that the vapor pressure $p_3$ of the subsequently introduced third component is higher at the introduction temperature than the vapor pressure $p_{(1+2)}$ of the liquid phase of the refrigerant components which have already been introduced into the vessel, and since the refrigerant components are introduced into the liquid phase L in the vessel upon being finely divided through the plurality of fine holes 15 of the inlet member 14 situated near the bottom 12 of the vessel body, a synergistic effect is achieved between the ascending current caused by the difference in liquid densities of the first and second components and the ascending current due to fine division by the porous body as a result of the vapor pressure difference of the third component, by which the refrigerant components thus flows upward in the liquid phase L during their introduction forming a circulating current while they are mixed, thereby allowing a uniform 3-component mixed refrigerant to be prepared in an efficient manner without powered agitation.

According to the production process based on the above-mentioned second aspect, once the order of introduction has been selected for the initial 2 components based on their liquid densities, the temperature of the liquid

EP 0 856 571 B1

phase L in the vessel and/or the temperature of the refrigerant components to be introduced may be appropriately adjusted to that the vapor pressure of the second component is higher than that of the first component. If the temperature is then adjusted so that the vapor pressure of the third component is higher than the vapor pressure of the liquid phase L already introduced into the vessel, the vapor pressure V of the vessel body 11 will be at a negative relative pressure at the moment of introduction, and therefore introduction of the refrigerant component will be possible by the vapor pressure difference alone without requiring injection with a gear pump or the like, thus allowing savings in electrical energy. Even in cases where a positive vapor pressure difference is created, the introduction may be accomplished in supplementary combination with a gear pump or the like, so that lower electrical energy can be used while effectively increasing the ascending current of the refrigerant components.

Concrete examples will now be given to further explain the order of mixing described above. These concrete examples, however, are in no way intended to be restrictive on the invention.

Concrete Example 11

Production of a 3-component mixed refrigerant with 3 different refrigerant components, HFC134a, HFC125 and HFC32 mixed in a selected order into prescribed weight proportions at 25°C.

For selection of the first and second components, the 3 possible combinations of refrigerant components are considered first and a combination is selected in which the liquid density of the first component is higher than the liquid density of the second component. Based on Table 1, such combinations are the following where the order of first component $\rightarrow$ second component is:

$$HFC134a \rightarrow HFC32,$$

$$HFC134a \rightarrow HFC125$$

and

$$HFC125 \rightarrow HFC32.$$

When the vapor pressures of HFC32, HFC125 and HFC134a as the third component are compared in order with the vapor pressures of these combinations, it can be seen from Tables 1, 2, 3 and 4 that in the range of weight proportions for HFC134a/HFC32 mixtures in which the proportion of HFC134a is greater than about 50% by weight, the vapor pressure of the mixture is lower than the vapor pressure of HFC125 alone (13.77 bar), while the vapor pressures of HFC134a/HFC125 mixtures are lower than the vapor pressure of HFC32 alone (16.91 bar) across the entire range of mixing proportions, and the vapor pressures of HFC125/HFC32 mixtures are higher than the vapor pressure of HFC134a alone (6.65 bar) over the entire range of mixing proportions.

Thus, according to the invention, when the proportion of HFC134a is greater than about 50% by weight with respect to HFC32, the mixing order should be selected so that HFC134a is the first component, HFC32 is the second component and HFC125 is the third component, or so that HFC134a is the first component, HFC125 is the second component and HFC32 is the third component.

In terms of the liquid densities, since the latter introduction is selected so that the liquid densities based on Tables 1 and 3 are in descending order, the order of introduction is the same as in Concrete Example 1 mentioned above. In regard to the vapor pressure difference as well, since in all cases the first component is HFC134a and the second component is HFC32 or HFC125, successively positive vapor pressure differences are obtained according to Table 1, and therefore introduction may be accomplished by the vapor pressure difference alone, without requiring pressurization with a gear pump or the like or a heating and cooling procedure, to thus provide an advantage in terms of energy.

Concrete Example 12

Production of a 3-component mixed refrigerant with 3 different refrigerant components, HFC134a, HFC125 and HFC143a mixed in a selected order into prescribed weight proportions at 25°C.

For selection of the first and second components, the 3 possible combinations of refrigerant components are considered first and a combination is selected in which the liquid density of the first component is higher than the liquid density of the second component. Based on Table 1, such combinations are the following where the order of first component - second component is:

HFC134a - HFC125,

HFC134a → HFC143a

and

HFC125 - HFC143a.

When the vapor pressures of HFC143a, HFC125 and HFC134a as the third component are compared in order with the vapor pressures of these combinations, it can be seen from Tables 1, 3, 8 and 9 that in the range of weight proportions for HFC134a/HFC125 mixtures in which the proportion of HFC134a is greater than about 25% by weight, the vapor pressure of the mixture is lower than the vapor pressure of HFC143a alone (12.61 bar), while the vapor pressures of HFC134a/HFC143a mixtures are lower than the vapor pressure of HFC125 alone (13.77 bar) across the entire range of mixing proportions, and the vapor pressures of HFC125/HFC143a mixtures are higher than the vapor pressure of HFC134a alone (6.65 bar) over the entire range of mixing proportions.

Thus, according to the invention, when the proportion of HFC134a is greater than about 25% by weight with respect to HFC125, the mixing order should be selected so that HFC134a is the first component, HFC125 is the second component and HFC143a is the third component, or so that HFC134a is the first component, HFC143a is the second component and HFC125 is the third component.

In terms of the liquid densities, since the initial introduction is selected so that the liquid densities based on Tables 1 and 3 are in descending order, the order of introduction is the same as in Concrete Example 4 mentioned above. In regard to the vapor pressure difference as well, since in all cases the first component is HFC134a and the second component is HFC125 or HFC143a, successively positive vapor pressure differences are obtained according to Table 1, and therefore introduction may be accomplished by the vapor pressure difference alone, without requiring pressurization with a gear pump or the like or a heating and cooling procedure, to thus provide an advantage in terms of energy.

According to the production process for a 3-component mixed refrigerant based on the second aspect of the invention exemplified above, the refrigerant components must be introduced so that the liquid density of the first component is higher at the introduction temperature than the liquid density of the second component, and the third component must be selected so that its vapor pressure is higher than the vapor pressure of the mixture in the vessel. By introduction of the second and third refrigerant components simultaneously into the liquid phase in the vessel through the plurality of fine holes of the inlet member situated near the bottom of the vessel body, an agitating effect is obtained from the finely divided ascending current from the porous body as a result of the vapor pressure difference of the third component, in addition to the ascending current caused by the difference in liquid densities of the first and second components, and this creates a circulating flow of the refrigerant components in the liquid phase L, so that the refrigerant components may be easily dispersed in the liquid phase without necessarily requiring powered agitation, for rapid production of a uniform 3-component mixed refrigerant. The porous body of the refrigerant component inlet member, as shown in Fig. 1(a) and Fig. 1(b), may be disk-shaped with a plurality of fine holes 15, or as shown in Fig. 2(a) and 2(b), it may be sphere-shaped with a plurality of fine holes 25.

In cases where the vessel is a relatively large stationary one, the refrigerant component inlet member is preferably, as shown by numeral 14 in Fig. 1(a) and 1(b), connected to the end of a liquid supply conduit 13 inserted near the bottom of the vessel body 11 from the bottom 12 via a valve 16.

On the other hand, in cases where the vessel is a relatively small transportable one such as a cylinder, as shown in Fig. 2(a) and 2(b), the vessel 20 may have a supply conduit 23 inserted in the top 22 of the vessel body 21 via a valve 26 and reaching to near the bottom of the vessel body, with an inlet member 24 made, for example, of a sphere-shaped porous body with a plurality of fine holes 25, at the end of the liquid supply conduit 23 inside the vessel.

In either case, the mixed refrigerant produced in the vessel may be removed through a separately provided outlet port (not shown). It may be removed through the liquid supply conduit 13 shown in Fig. 1(a) or the liquid supply conduit 23 shown in Fig. 2(a) by the internal pressure of the vessel, or with a gear pump (not shown).

The ambient temperature for carrying out the production process for a 3-component mixed refrigerant according to the second aspect of the invention is not particularly restricted. The temperature need only be selected so that the different components of the mixed refrigerant can be mixed in liquid form and so that difference in liquid density and preferably the vapor pressure difference can be achieved according to the invention. In practice, the temperature of the liquid phase in the vessel and the introduced liquid components will preferably be selected in a range of from -100°C to 40°C. Temperatures of under -100°C are not preferred as the liquid components may solidify. Temperatures exceeding 40°C are not preferred because most refrigerant components are liquefied gases and will often be subject to legal restrictions for high pressure gases.

When carrying out this process of the invention, a greater difference in the liquid densities of the liquid phase in the vessel and the refrigerant component to be introduced will, of course, improve the mixing efficiency, but there is no definite minimum since it will depend on selection of the refrigerant components to be mixed. In general, the process of the invention can be smoothly carried out so long as the difference in liquid densities is at least 0.01. For example, when HFC125 is mixed with HCF134a at 25°C, the liquid density of 1.206 for HFC134a and the liquid density of 1.190 for HFC125 gives a difference of 0.016, and this liquid density difference will allow satisfactory mixture without powered agitation.

A greater vapor pressure difference with the third refrigerant component to be introduced will of course enhance the agitating effect due to the ascending current, but in most cases the process of the invention can be smoothly carried out so long as the vapor pressure difference is about 1 bar or higher.

According to the above-mentioned production process for a 3-component mixed refrigerant of the invention, mixing of the refrigerant components can be efficiently accomplished without powered agitation with a stirrer or pump circulator. In the case of particularly large-size vessels, however, a stirrer or pump circulator device may be installed for internal agitation.

The above explanation was given with reference to a vertical mixing vessel, but application of the present invention is not limited thereto, and horizontal vessels may be used, as well as vessels of any shape or volume. In addition, the structure, positioning and area of the holes in the liquid phase component inlet member are not particularly limited to those mentioned above. Furthermore, the combinations and composition ratios of the refrigerant components, the type and volume of pump used, the method of heating and cooling and the supplementary agitation means are in no way limited to those mentioned in the present specification.

The process of the invention explained above allows easy production of the conventionally known mixed refrigerants listed in Table 10, for example, regardless of the production scale, and even in the case of test mixtures for development of new mixed refrigerants, the process allows easy preparation of such test refrigerants without the use of stirrer-equipped test apparatuses which require complicated sealing means.

Table 10

| Name | Composition | Composition ratio (wt%) |
|------|-------------|-------------------------|
| R502 | HCFC22/CFC115 | 48.8/51.2 |
| R407C | HFC32/HFC125/HFC134a | 23/25/52 |
| R403B | HC290/HCFC22/FC218 | 5/56/39 |
| R404A | HFC125/HFC143a/HFC134a | 44/52/4 |
| R410A | HFC32/HFC125 | 50/50 |

The present invention will now be explained in more detail by way of examples.

Example 1

A vessel such as shown in Fig. 1(a) and Fig. 1(b) was used to produce 500 kg of a 3-component non-azeotropic mixed refrigerant (common name: "R407C") comprising HFC32 (23 wt%), HFC125 (25 wt%) and HFC134a (52 wt%) at 25°C.

In the apparatus shown in Fig. 1(a) and Fig. 1(b), the plurality of fine holes 15 formed in the disk-shaped porous body of the inlet member 14 have a total opening area which is equal to the cross-sectional area of the liquid supply conduit 13.

First, a gear pump (not shown) was used to introduce HFC134a (260 kg) as the first component having the highest liquid density among the 3 components, into the vessel body 11 through the valve 16, liquid supply conduit 13 and inlet member 14. Once the introduction had been completed, the inlet member 14 was immersed in the liquid phase L.

In order to determine the order of introduction of the other 2 components, their liquid densities at 25°C were compared. A mixture of HFC134a and HFC125 in a weight proportion of approximately 67.5:32.5 has a liquid density of 1.208 which is higher than the liquid density of HFC32 (0.961), and therefore upon selecting HFC125 as the second component and HFC32 as the third component, HFC125 (125 kg) and HFC32 (115) kg were introduced in that order into the vessel body 11 via the valve 16, liquid supply conduit 13 and inlet member 14.

For introduction of the second and third components, since the vapor pressure of the second component HFC125 (13.77 bar) is higher than the vapor pressure of the first component HFC134a (6.65 bar), and the vapor pressure of the third component HFC32 (16.91 bar) is higher than the vapor pressure of their mixture (8.93 bar), it was possible to accomplish introduction by the vapor pressure difference alone, without using a gear pump.

Based on continuous sampling of the liquid phase L in the vessel body 11 and monitoring of the composition ratio of the liquid phase by gas chromatography, the desired composition ratio was reached and stabilization achieved at about one hour. Thus, 500 kg of R407C was efficiently produced.

Comparative Example 1

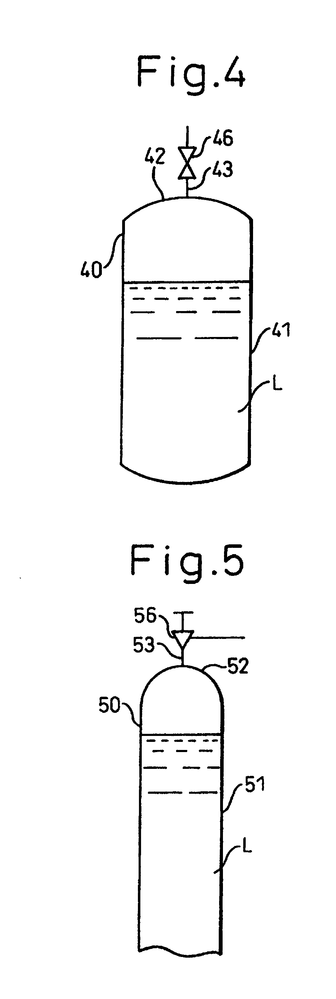

The same procedure as Example 1 was carried out to produce 500 kg of R407C, except that the vessel 40 shown in Fig. 4 was employed.

The vessel 40 in Fig. 4 is provided with a liquid supply conduit 43 and valve 46 at the top 42 of the vessel body 41, in such a manner that the liquid refrigerant components are introduced through the valve 46 into the top of the vessel body 41.

First, HFC134a (260 kg) was introduced as the first component using a gear pump (not shown). Introduction of the second component HFC125 (125 kg) was accomplished by the vapor pressure difference alone without using the gear pump, but in the course of introducing the third component HFC32 (115 kg), the vapor pressure difference decreased to the point of impeding the introduction, and therefore the gear pump had to be used for pressurized introduction. As a result, the process of Comparative Example 1 consumed more electrical energy than the process of Example 1.

Based on continuous sampling of the liquid phase L in the vessel body 41 and monitoring of the composition ratio of the liquid phase by gas chromatography, over 24 hours were necessary to reach the desired composition ratio and achieve stabilization.

A comparison of Example 1 and Comparative Example 1 shows that a mixed refrigerant can be very efficiently produced by the mixed refrigerant production process of the present invention whereby the order of introduction of the refrigerant components (groups) is selected so that the liquid density of the refrigerant component (group) to be introduced is lower at the introduction temperature than the liquid density of the liquid phase L already introduced into the vessel, and with each refrigerant component introduced into the liquid phase L which has already been introduced into the vessel.

Comparative Example 2

A vessel 10 such as shown in Fig. 1(a) and Fig. 1(b) was used in the same manner as Example 1 to produce 500 kg of R407C, but with the mixing components introduced in the opposite order.

First, HFC32 (115 kg) was introduced into the vessel body 11 using a gear pump (not shown). It was attempted to introduce HFC125 (125 kg) without using the gear pump, but it could not be introduced because of a reverse pressure difference, and therefore the gear pump was used for pressurization. The final component HFC134a (260 kg) was also introduced using the gear pump for pressurization because of a reverse pressure difference. As a result, the process of Comparative Example 2 consumed more electrical energy than the process of Example 1.

Regarding the density of the liquid phase in the vessel when introduction was carried out in the order of Comparative Example 2, since the liquid density of the first component HFC32 is 0.961 while the liquid density of the subsequently introduced component HFC125 is 1.190, the liquid density of the subsequently introduced component was higher. Also, since the liquid density of the HFC32 and HFC125 mixture is 1.069 while the liquid density of the final introduced component HFC134a is 1.206, the liquid density of the subsequently introduced component was higher in this case as well. As a result, based on continuous sampling of the liquid phase L in the vessel and monitoring of the composition ratio of the liquid phase by gas chromatography, the time required to reach the desired composition ratio and achieve stabilization was shorter compared with Comparative Example 1 but longer compared with Example 1.

Example 2

A transportable vessel 20 such as shown in Fig. 2(a) and Fig. 2(b) was used to produce 100 kg of R407C at 25°C, using as the starting materials HFC134a and a prepared azeotropic-like mixture of HFC125 and HFC32 in a weight proportion of about 48:52.

The vessel 20 shown in Fig. 2(a) and Fig.2(b) has a liquid supply conduit 23 inserted in the top 22 of the long cylindrical vessel body 21 and reaching to near the bottom, with an inlet member 24 made of a spherical porous body installed at the end of the liquid supply conduit 23 in the vessel. A plurality of fine holes 25 formed in the inlet member 24 have a total opening area which is equal to the cross-sectional area of the liquid supply conduit 23.

Since the liquid density of HFC134a is 1.206 and the liquid density of the aforementioned mixture is 1.069, HFC134a was selected as the first component, and 52 kg thereof was introduced into the vessel body 21 through the valve 26, liquid supply conduit 23 and inlet member 24 using a gear pump (not shown). As a result of this introduction, the inlet member 24 was immersed in the liquid phase L.

The aforementioned HFC125/HFC32 mixture (48 kg) was then introduced as the second component into the vessel body 21 through the inlet member 24.

Here, since the vapor pressure of the HFC125/HFC32 mixture is 16.6 bar, which is higher than the vapor pressure of 6.65 bar for the first component HFC134a, introduction of the second component was possible by the vapor pressure difference alone, without using the gear pump.

Based on continuous sampling of the liquid phase L in the vessel body 21 and monitoring of the composition ratio of the liquid phase by gas chromatography, the desired composition ratio was reached and stabilization achieved at about one hour. Thus, 100 kg of R407C was efficiently produced in the transportable vessel.

Comparative Example 3

The same procedure as Example 2 was carried out to produce 100 kg of R407C, except that a vessel such as shown in Fig. 5 was employed.

The vessel 50 in Fig. 5 is provided with a liquid supply conduit 53 and valve 56 at the top 52 of a long cylindrical vessel body 51, in such a manner that the liquid refrigerant components are introduced through the valve 56 into the top of the vessel body 51.

First, HFC134a (52 kg) was introduced as the first component using a gear pump (not shown). The same type of HFC125/HFC32 mixture (48 kg) as in Example 2 was then introduced. Although the introduction was possible by the vapor pressure difference alone without using the gear pump, a longer time was required than Example 2.

Based on continuous sampling of the liquid phase L in the vessel body 51 and monitoring of the composition ratio of the liquid phase by gas chromatography, over 24 hours were necessary to reach the desired composition ratio and achieve stabilization.

A comparison of Example 2 and Comparative Example 3 shows that a mixed refrigerant can be very efficiently produced with a transportable vessel as well, using the production process of the present invention whereby the order of introduction of the refrigerant components is selected so that the liquid density of the refrigerant component to be introduced is lower at the introduction temperature than the liquid density of the liquid phase already introduced into the vessel, and the latter refrigerant component to be introduced is introduced into the liquid phase in the vessel.

Comparative Example 4

A vessel 20 such as shown in Fig. 2(a) and Fig. 2(b) was used in the same manner as Example 2 to produce 100 kg of R407C, but with the mixing components introduced in the opposite order.

First, the HFC125/HFC32 mixture (48 kg) was introduced into the vessel body 21 using a gear pump (not shown). It was then attempted to introduce HFC134a (52 kg) without using the gear pump, but it could not be introduced because of a reverse pressure difference, and therefore the gear pump had to be used for pressurized introduction. As a result, the process of Comparative Example 4 consumed more electrical energy than the process of Example 2.

Based on continuous sampling of the liquid phase L in the vessel body 21 and monitoring of the composition ratio of the liquid phase by gas chromatography, the time required to reach the desired composition ratio and achieve stabilization was shorter compared with Comparative Example 3 but longer compared with Example 2.

Example 3

A vessel 10 such as shown in Fig. 1(a) and Fig. 1(b) was used to produce 500 kg of a 3-component mixed refrigerant (common name: "R403B") comprising FC218 (39 wt%), HCFC22 (56 wt%) and HC290 (5 wt%) at 25°C. First, a gear pump (not shown) was used to introduce FC218 (195 kg) as the first component having the highest liquid density among the 3 components, into the vessel body 11.

In order to determine the order of introduction of the other 2 components, their liquid densities at 25°C were compared. A mixture of FC218 and HCFC22 in a weight proportion of approximately 41:59 has a liquid density of 1.248 which is higher than the liquid density of HC290 (0.492), and therefore upon selecting HCFC22 as the second component and HC290 as the third component, they were introduced into the vessel in that order in amounts of 280 kg and 25 kg, respectively.

For introduction of the second component, since the vapor pressure of the second component HCFC22 (10.44 bar) is higher than the vapor pressure of the first component FC218 (8.8 bar), it was possible to accomplish the introduction by the vapor pressure difference alone, without using a gear pump.

Next, for introduction of the third component, since the vapor pressure of the mixture of the first component and second component was 12.1 bar while the vapor pressure of the third component HC290 was lower at 9.52 bar, introduction could not be accomplished by the vapor pressure difference. The liquid phase L in the vessel body 11 was therefore cooled to 20°C to achieve a vapor pressure of 10.59 bar and a liquid density of 1.27, while the third component HC290 was heated to 30°C to achieve a vapor pressure of 12.2 bar and a liquid density of 0.476, thus creating a positive vapor pressure and also widening the liquid density difference the positive direction; it therefore became possible to introduce the third component into the vessel body 11 without using the gear pump.

Based on continuous sampling of the liquid phase L in the vessel body 11 and monitoring of the composition ratio of the liquid phase by gas chromatography, the desired composition ratio was reached and stabilization achieved at about one hour. Thus, 500 kg of R403B was efficiently produced.

Comparative Example 5

The same procedure as Example 3 was carried out to produce 500 kg of R403B, except that a vessel 40 such as shown in Fig. 4 having a liquid introduction port opened at the top was employed.

First, a gear pump (not shown) was used to introduce FC218 (195 kg) as the first component into the vessel body 41 at 25°C. The second component HCFC22 (280 kg) was then introduced by the vapor pressure difference alone without using the gear pump, but a longer time was required than for Example 3.

Next, for introduction of the third component HC290 (25 kg), the liquid phase L of the mixture of the first and second components in the vessel body 41 was cooled to 20°C while the third component HC290 was heated to 30°C for introduction into the vessel body 41, and although it was possible to accomplish the introduction without using the gear pump, a longer time was required than for Example 3.

Based on continuous sampling of the liquid phase L in the vessel body 41 and monitoring of the composition ratio of the liquid phase by gas chromatography, over 24 hours were necessary to reach the desired composition ratio and achieve stabilization.

A comparison of Example 3 and Comparative Example 5 shows that a mixed refrigerant can be very efficiently produced by the mixed refrigerant production process of the invention.

Comparative Example 6

A vessel 10 such as shown in Fig. 1(a) and Fig. 1(b) was used in the same manner as Example 3 to produce 500 kg of R403B at 25°C, but with the mixing components introduced in the opposite order.

First, HC290 (25 kg) was introduced into the vessel using a gear pump (not shown). HCFC22 (280 kg) was then introduced in the same manner. It was then attempted to introduce FC218 (195 kg) by the vapor pressure difference alone without using the gear pump, but it could not be introduced because of a reverse pressure difference, and therefore the gear pump was used for pressurized introduction. The liquid density of HC290 was 0.492, the liquid density of HCFC22 was 1.191, the liquid density of the HC290/HCFC22 mixture was 1.069 and the liquid density of FC218 was 1.323.

Based on continuous sampling of the liquid phase L in the vessel body 11 and monitoring of the composition ratio of the liquid phase by gas chromatography, the time required to reach the desired composition ratio and achieve stabilization was shorter compared with Comparative Example 5 but longer compared with Example 3.

Example 4

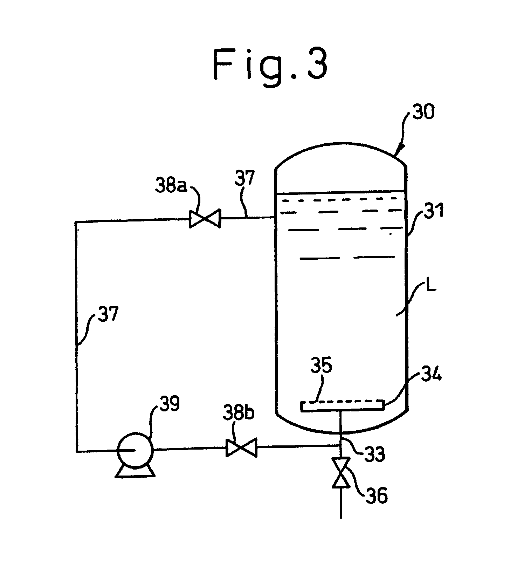

A vessel such as shown in Fig. 3 was used to produce 500 kg of a 3-component non-azeotropic mixed refrigerant (common name: "R404A") comprising HFC125 (44 wt%), HFC143a (52 wt%) and HFC134a (4 wt%) at 25°C.

The vessel 30 shown in Fig. 3 has a liquid supply conduit 33 inserted through the bottom of a pressure sealed vessel (hereunder referred to simply as a "vessel") 31, and the end of the liquid supply conduit 33 inside the vessel body is connected to an inlet member 34 situated near the bottom. The end of the liquid supply conduit 33 outside the vessel body is connected to a refrigerant component storage container (not shown) via a valve 36. The inlet member 34 is composed of a porous disk which is hollow inside, and the bottom side thereof is connected to the liquid supply conduit 33 while the upper side opens into the vessel body 31 via a plurality of fine holes 35. The fine holes 35 have a total opening area which is equal to the cross-sectional area of the liquid supply conduit 33.

In addition, an auxiliary conduit 37 extends from the side near the top of the vessel body 31, so that the liquid phase L in the vessel body 31 circulates to the liquid supply conduit 33 through a liquid circulation valve 38a, liquid circulation pump 39 and liquid circulation valve 38b in that order.

First, the circulation valves 38a, 38b were closed and a gear pump (not shown) was used to introduce HFC134a (20 kg), having the highest liquid density among the 3 components, as the first component into the vessel body 31 through the valve 36, liquid supply conduit 33 and inlet member 34. As a result of this introduction, the inlet member 34 is immersed in the liquid phase L.

In order to determine the order of introduction of the other 2 components, their liquid densities at 25°C were compared. A mixture of HFC134a and HFC125 in a weight proportion of approximately 8.3:91.7 has a liquid density of 1.192 which is higher than the liquid density of HFC143a (0.931), and therefore upon selecting HFC125 as the second component and HFC143a as the third component, HFC125 (220 kg) and HFC143a (260 kg) were introduced in that order into the vessel body 31 through the valve 36, liquid supply conduit 33 and inlet member 34.

A gear pump was used to aid in introduction of the second component HFC125, but since the vapor pressure of the second component HFC125 (13.77 bar) is higher than the vapor pressure of the first component HFC134a (6.65 bar), it was possible to accomplish the introduction rapidly with little electrical energy consumption. For introduction of the third component HFC143a, since the vapor pressure of the above-mentioned HFC134a/HFC125 mixture was 13.15 bar while the vapor pressure of the third component HFC143a was lower at 12.61 bar, the introduction was accomplished by pressurization using the gear pump because of the reverse vapor pressure difference.

The circulation system consisting of the liquid circulation valve 38a, liquid circulation pump 39 and liquid circulation valve 38b was activated to circulate the liquid phase L in the vessel body 31 through the liquid supply conduit 33.

Based on continuous sampling of the liquid phase L in the vessel body 31 and monitoring of the composition ratio of the liquid phase by gas chromatography, the desired composition ratio was reached and stabilization achieved in about 30 minutes. Thus, 500 kg of R404A was efficiently produced.

Comparative Example 7

A vessel such as shown in Fig. 3 was used in the same manner as Example 4 to produce 500 kg of R404A, but with the mixing components introduced in the opposite order.

First, HFC143a (260 kg) was introduced into the vessel body 31 using a gear pump (not shown), and then HFC125 (220 kg) and HFC134a (20 kg) were introduced into the vessel body 31 in that order using the gear pump.

The liquid density of the HFC143a was 0.931, the liquid density of the HCF125 was 1.190, the liquid density of the HFC143a/HFC125 mixture was 1.035 and the liquid density of the HFC134a was 1.206.

The circulation system consisting of the liquid circulation valve 38a, liquid circulation pump 39 and liquid circulation valve 38b was also activated as in Example 4 for circulation of the liquid. Based on continuous sampling of the liquid phase L in the vessel body 31 and monitoring of the composition ratio of the liquid phase by gas chromatography, the time required to reach the desired composition ratio and achieve stabilization was longer compared with Example 4, and therefore more power was also consumed for circulation.

Example 5

A transportable vessel 20 such as shown in Fig. 2(a) and Fig. 2(b) was used to produce 100 kg of R404A at 25°C, using as the starting materials HFC134a and a prepared mixture of HFC125 and HFC143a in a weight proportion of about 45.8:54.2.

Since the liquid density of HFC134a is 1.206 and the liquid density of the aforementioned mixture is 1.035, HFC134a was selected as the first component, and 4 kg thereof was introduced into the vessel body 21 through the valve 26, liquid supply conduit 23 and inlet member 24 using a gear pump (not shown).

The aforementioned HFC125/HFC143a mixture (96 kg) was then introduced as the second component into the vessel body 21 through the inlet member 24 in the same manner.

Here, since the vapor pressure of the HFC125/HFC143a mixture was 12.25 bar, which was higher than the vapor pressure of 6.65 bar for the first component HFC134a, rapid introduction of the second component was possible with little electrical energy consumption.

Based on continuous sampling of the liquid phase L in the vessel body 21 and monitoring of the composition ratio of the liquid phase by gas chromatography, the desired composition ratio was reached and stabilization achieved at about one hour. Thus, 100 kg of R404A was efficiently produced in the transportable vessel.

Comparative Example 8

A vessel such as shown in Fig. 2(a) and Fig. 2(b) was used in the same manner as Example 5 to produce 100 kg of R404A, but with the mixing components introduced in the opposite order.

First, a HFC125/HFC143a mixture (96 kg) with the same composition ratio as Example 5 was introduced into the vessel body 21 using a gear pump (not shown), and then HFC134a (4 kg) was introduced.

Based on continuous sampling of the liquid phase L in the vessel body 21 and monitoring of the composition ratio of the liquid phase by gas chromatography, the time required to reach the desired composition ratio and achieve stabilization was longer compared with Example 5.

Example 6

A vessel 10 such as shown in Fig. 1(a) and Fig. 1(b) was used to produce 500 kg of a 2-component azeotropic-like mixed refrigerant (common name: "R410A") comprising HFC32 (50 wt%) and HFC125 (50 wt%) at 25°C.

In the vessel 10 shown in Fig. 1(a) and Fig. 1(b), the plurality of fine holes 15 formed in the disk-shaped porous body of the inlet member 14 have a total opening area which is equal to the cross-sectional area of the liquid supply conduit 13.

First, a gear pump (not shown) was used to introduce HFC125 (260 kg) as the first component having the higher liquid density, into the vessel body 11 through the valve 16, liquid supply conduit 13 and inlet member 14, and then HFC32 (250 kg) was introduced in the same manner as the second component. When introduction of the HFC32 was nearly completed, the vapor pressure inside the vessel body exhibited a value close to that of HFC32. Based on continuous sampling of the liquid phase L in the vessel body 11 and monitoring of the composition ratio of the liquid phase by gas chromatography, the desired composition ratio was reached and stabilization achieved at about one hour. Thus, 500 kg of R410A was efficiently produced.

Comparative Example 9

A vessel 10 such as shown in Fig. 1(a) and Fig. 1(b) was used in the same manner as Example 6 to produce 500 kg of R410A, but with the mixing components introduced in the opposite order.

First, HFC32 (250 kg) was introduced into the vessel body 11 using a gear pump (not shown), and then HFC125 (250 kg) was introduced in the same manner. Because a longer time was required for introduction because of the reverse vapor pressure difference with respect to the initial stage of introduction, more power was consumed by the pump compared with Example 6. Based on continuous sampling of the liquid phase L in the vessel body 11 and monitoring of the composition ratio of the liquid phase by gas chromatography, the time required to reach the desired composition ratio and achieve stabilization was longer compared with Example 6.

Example 7

A vessel such as shown in Fig. 1(a) and Fig. 1(b) was used to produce 500 kg of a 3-component non-azeotropic mixed refrigerant (common name: "R407C") comprising HFC32 (23 wt%), HFC125 (25 wt%) and HFC134a (52 wt%) at 25°C.

In the apparatus shown in Fig. 1(a) and Fig. 1(b), the plurality of fine holes 15 formed in the disk-shaped porous body of the inlet member 14 have a total opening area which is equal to the cross-sectional area of the liquid supply conduit 13.

First, combinations are selected wherein the liquid density of the first component is greater than the liquid density of the second component at 25°C. Next, the vapor pressures of first and second component mixtures and the remaining third component at 25°C are compared. The liquid density of HFC134a is 1.206, the liquid density of HFC32 is 0.961 and the vapor pressure of a mixture thereof in a weight proportion of approximately 69.3:30.7 is 11.17 bar, which is lower than the vapor pressure of HFC125 (13.77 bar), and therefore upon selecting HFC134a (260 kg) as the first component, HFC32 (115 kg) as the second component and HFC125 (125 kg) as the third component, they were introduced in that order into the vessel body 11 via the valve 16, liquid supply conduit 13 and inlet member 14.

The first component HFC134a was introduced into the vessel body 11 through the liquid supply conduit 13 and inlet member 14, using a gear pump (not shown). Once the introduction had been completed, the inlet member 14 was inside the liquid phase L. For introduction of the second and third components, since the vapor pressure of the second component HFC32 (16.91 bar) is higher than the vapor pressure of the first component HFC134a (6.65 bar), and the vapor pressure of their mixture (11.17 bar) is set to be lower than the vapor pressure of the third component HFC125 (13.77 bar), it was possible to accomplish introduction by the vapor pressure difference alone without using the gear pump, thus allowing a saving in electrical energy.

Based on continuous sampling of the liquid phase L in the vessel body 11 and monitoring of the composition ratio of the liquid phase by gas chromatography, the desired composition ratio was reached and stabilization achieved at about one hour. Thus, 500 kg of R407C was efficiently produced.

Example 8

A vessel such as shown in Fig. 3 was used to produce 500 kg of a 3-component non-azeotropic mixed refrigerant (common name: "R404A") comprising HFC125 (44 wt%), HFC143a (52 wt%) and HFC134a (4 wt%) at 25°C.

The vessel 30 shown in Fig. 3 has a liquid supply conduit 33 inserted through the bottom of the vessel body 31, and the end of the liquid supply conduit 33 inside the vessel body is connected to an inlet member 34 situated near the bottom. The end of the liquid supply conduit 33 outside the vessel body is connected to a refrigerant component storage container (not shown) via a valve 36. The inlet member 34 is composed of a porous disk which is hollow inside, and the bottom side thereof is connected to the liquid supply conduit 33 while the upper side opens into the vessel body 31 via a plurality of fine holes 35. The fine holes 35 have a total opening area which is equal to the cross-sectional area of the liquid supply conduit 33.

In addition, an auxiliary conduit 37 extends from the side near the top of the vessel body 31, so that the liquid phase L in the vessel body 31 circulates to the liquid supply conduit 33 through a liquid circulation valve 38a, liquid circulation pump 39 and liquid circulation valve 38b in that order.

First, combinations are selected wherein the liquid density of the first component is greater than the liquid density of the second component at 25°C. Next, the vapor pressures of first and second component mixtures and the remaining third component at 25°C are compared. The liquid density of HFC134a is 1.206, the liquid density of HFC143a is 0.931 and the vapor pressure of a mixture thereof in a weight proportion of approximately 7.1:92.9 is 12.34 bar, which is lower than the vapor pressure of HFC125 (13.77 bar), and therefore upon selecting HFC134a (20 kg) as the first component, HFC143a (260 kg) as the second component and HFC125 (220 kg) as the third component, they were introduced in that order into the vessel body 31 via the valve 36, liquid supply conduit 33 and inlet member 34.

The first component HFC134a was introduced into the vessel body 31 through the valve 36, liquid supply conduit 33 and inlet member 34, using a gear pump (not shown). Once the introduction had been completed, the inlet member 34 was immersed in the liquid phase L. A gear pump was used to aid in introduction of the second component, but since the vapor pressure of the second component HFC143a (12.61 bar) was higher than the vapor pressure of the first component HFC134a (6.65 bar), it was possible to accomplish the introduction rapidly with little electrical energy consumption. Also, since the vapor pressure of their mixture (12.34 bar) was set to be lower than the vapor pressure of the third component HFC125 (13.77 bar), it was possible to accomplish introduction of the third component by the vapor pressure difference alone without using the gear pump, thus allowing overall savings in electrical energy.

The circulation system consisting of the liquid circulation valve 38a, liquid circulation pump 39 and liquid circulation valve 38b was also activated for circulation of the liquid phase L in the vessel body 31 through the liquid supply conduit 33. Based on continuous sampling of the liquid phase L in the vessel body 31 and monitoring of the composition ratio of the liquid phase by gas chromatography, the desired composition ratio'was reached and stabilization achieved in about 30 minutes. Thus, 500 kg of R404A was efficiently produced.

A comparison of Examples 1 to 6 based on the first aspect of the present invention with Comparative Examples 1 to 9 shows that mixing of refrigerant components is accelerated by the relatively simple production process according to claim 1 of the present invention whereby the order of introduction of the refrigerant components is selected so that the liquid density of the refrigerant component to be introduced is lower at the introduction temperature than the density of the liquid phase already introduced into the vessel, and the subsequently introduced refrigerant component is introduced into the liquid phase already introduced into the vessel, and into further shows that mixed refrigerants can be economically and efficiently produced according to a preferred aspect whereby the temperature conditions are set so that the vapor pressure of the refrigerant component to be introduced is higher than the vapor pressure of the liquid phase already introduced into the vessel.

Moreover, a comparison of Examples 7 and 8 based on the second aspect of the present invention with Comparative Examples 1, 2 and 7 shows that for production of a 3-component mixed refrigerant comprising HFC134a and 2 different refrigerant components selected from the group consisting of HFC32, HFC143a and HFC125, such a 3-component mixed refrigerant can be economically and efficiently produced by the relatively simple production process according to claim 3 of the present invention whereby the order of introduction of the refrigerant components is selected so that when introducing the initial 2 different components, the liquid density of the refrigerant component to be introduced is lower at the introduction temperature than the density of the refrigerant component already introduced into the vessel, and when introducing the final refrigerant component, its vapor pressure is selected so as to be higher at the introduction temperature than the vapor pressure of the mixture already introduced into the vessel, and each subsequently introduced refrigerant component is introduced into the already introduced liquid phase.

In the mixed refrigerant production process according to the first aspect of the invention, the order of introduction of the refrigerant components is selected in such a manner that the liquid density of each subsequently introduced refrigerant component is lower at the introduction temperature than the liquid density of the refrigerant components already introduced into the vessel, and thus since the refrigerant component to be introduced afterwards is introduced into the liquid phase of the already introduced refrigerant components, uniform mixing of the refrigerant components can be rapidly and efficiently achieved without requiring powered stirring, or with only slight supplementary agitation.

Also, in the production process according to the second aspect of the invention for 3-component mixed refrigerants comprising specific HFC refrigerant components, the introduction of the 2 components into the vessel in the initial stage is selected so that they are introduced in the order of descending liquid density at the introduction temperature, while the vapor pressure of the final component is selected so as to be higher than the vapor pressure of the 2-component mixture, and the refrigerant component to be introduced afterwards is introduced into the liquid phase of the already introduced refrigerant components; consequently, uniform mixing of the refrigerant components can be rapidly and efficiently achieved without requiring powered stirring, or with only slight supplementary agitation.

**Claims**

1.  A process for producing a mixed refrigerant by which 2 or more different refrigerant components are successively introduced into a vessel at or near its bottom in liquid form to produce a mixed refrigerant, which process comprises selecting the order of introduction of the refrigerant components (groups) so that the liquid density of the refrigerant component (group) to be introduced afterwards is lower at the introduction temperature than the liquid density of the refrigerant component (group) already introduced into the vessel, and introducing the subsequently introduced refrigerant component (group) into the liquid phase of the already introduced refrigerant component (group).

2.  The process according to claim 1, wherein said refrigerant components (groups) are one or more selected from the group consisting of hydrochlorofluorocarbons (HCFCs), hydrofluorocarbons (HFCs), hydrocarbons (HCs), fluorocarbons (FCs), hydrofluoroethers (HFEs), fluoroethers (FEs) and fluoroiodocarbons (FICs).

3.  A process for producing a mixed refrigerant wherein a mixed refrigerant composed of 3 different refrigerant components is produced by successively introducing any 2 components selected from the group consisting of difluoromethane, 1,1,1-trifluoroethane and pentafluoroethane, with 1,1,1,2-tetrafluoroethane into a vessel at or near its bottom in liquid form, which process comprises selecting the order of introduction of the refrigerant components so that the liquid density of the latter refrigerant component to be introduced among the 2 different refrigerant components introduced at the initial stage is lower at the introduction temperature than the liquid density of the refrigerant component already introduced into the vessel, selecting the vapor pressure of the final refrigerant component to be introduced thereafter so that it is higher at the introduction temperature than the vapor pressure of the liquid phase of the refrigerant component group already introduced into the vessel, and introducing the subsequently introduced refrigerant component (group) into the liquid phase of the already introduced refrigerant component (group).

4.  The process according to claim 1 or claim 3, wherein said refrigerant components (groups) are introduced into the vessel through 2 or more openings or porous fine holes.

5.  The process according to claim 1 or claim 3, wherein said liquid phase in the vessel is agitated using a pump circulator or stirrer during and/or after introduction of the refrigerant components (groups).

**Patentansprüche**

1.  Verfahren zur Herstellung eines gemischten Kühlmittels, bei dem zwei oder mehr verschiedene Kühlmittelkomponenten nacheinander in flüssiger Form in ein Gefäß an oder in der Nähe von dessen Boden eingeleitet werden, um ein gemischtes Kühlmittel herzustellen, wobei in dem Verfahren die Reihenfolge des Einleitens der Kühlmittelkomponenten (Gruppen) so gewählt wird, daß die Flüssigkeitsdichte der später einzuleitenden Kühlmittelkomponente (Gruppe) bei der Temperatur des Einleitens niedriger ist als die Flüssigkeitsdichte der bereits in das Gefäß eingeleiteten Kühlmittelkomponente (Gruppe), und wobei die später eingeleitete Kühlmittelkomponente (Gruppe) in die flüssige Phase der bereits eingeleiteten Kühlmittelkomponente (Gruppe) eingeleitet wird.

2.  Verfahren nach Anspruch 1, wobei die Kühlmittelkomponenten (Gruppen) eine oder mehr Verbindungen ist bzw. sind, die aus der aus Chlorfluorkohlenwasserstoffen (HCFCs), Fluorkohlenwasserstoffen (HFCs), Kohlenwasserstoffen (HCs), Fluorkohlenstoffen (FCs), Hydrofluorethern (HFEs), Fluorethern (FEs) und Fluoriodkohlenstoffen (FICs) bestehenden Gruppe ausgewählt ist bzw. sind.

3.  erfahren zur Herstellung eines gemischten Kühlmittels, wobei ein aus drei verschiedenen Kühlmittelkomponenten bestehendes gemischtes Kühlmittel hergestellt wird, indem nacheinander beliebige zwei Komponenten, die aus der aus Difluormethan, 1,1,1-Trifluorethan und Pentafluorethan bestehenden Gruppe ausgewählt sind, mit 1,1,1,2-Tetrafluorethan in flüssiger Form in ein Gefäß an oder nahe von dessen Boden eingeleitet werden, wobei die Reihenfolge des Einleitens der Kühlmittelkomponenten so gewählt wird, daß die Flüssigkeitsdichte der Kühlmittelkomponente von den in der Anfangsstufe eingeleiteten zwei verschiedenen Kühlmittelkomponenten, die zuletzt eingeleitet wird, bei der Temperatur des Einleitens niedriger ist als die Flüssigkeitsdichte der bereits in das Gefäß eingeleiteten Kühlmittelkomponente, wobei der Dampfdruck der danach schließlich einzuleitenden Kühlmittelkomponente so gewählt wird, daß er bei der Temperatur des Einleitens höher ist als der Dampfdruck der flüssigen Phase der bereits in das Gefäß eingeleiteten Kühlmittelkomponente, und wobei die danach eingeleitete Kühlmittelkomponente (Gruppe) in die flüssige Phase der bereits eingeleiteten Kühlmittelkomponente (Gruppe) eingeleitet wird.

4. Verfahren nach Anspruch 1 oder Anspruch 3, wobei die Kühlmittelkomponenten (Gruppen) durch zwei oder mehr Öffnungen oder feinporige Löcher in das Gefäß eingeleitet werden.

5. Verfahren nach Anspruch 1 oder Anspruch 3, wobei die flüssige Phase in dem Gefäß unter Verwendung einer Kreislaufpumpe oder eines Rührers während und/oder nach dem Einleiten der Kühlmittelkomponenten (Gruppen) gerührt wird.

**Revendications**

1. Procédé de production d'un fluide réfrigérant sous forme d'un mélange, dans lequel deux ingrédients différents au moins de fluide réfrigérant sont introduits successivement dans un réservoir à son fond ou à proximité de son fond, sous forme liquide, pour la production d'un fluide réfrigérant sous forme d'un mélange, le procédé comprenant la sélection de l'ordre d'introduction des ingrédients (groupes) du fluide réfrigérant afin que la masse volumique du liquide de l'ingrédient (groupe) du fluide réfrigérant à introduire ensuite, à la température d'introduction, soit inférieure à la masse volumique du liquide de l'ingrédient (groupe) de fluide réfrigérant déjà introduit dans le réservoir, et l'introduction de l'ingrédient (groupe) de fluide réfrigérant introduit ultérieurement dans la phase liquide de l'ingrédient (groupe) de fluide réfrigérant déjà introduit.

2. Procédé selon la revendication 1, dans lequel les ingrédients (groupes) de fluide réfrigérant sont sous forme d'une ou plusieurs substances choisies dans le groupe constitué par les composés hydrochlorofluorocarbonés (HCFC), les composés hydrofluorocarbonés (HFC), les hydrocarbures (HC), les composés fluorocarbonés (FC), les hydrofluoréthers (HFE), les fluoréthers (FE) et les composés fluoroiodo-carbonés (FIC).

3. Procédé de production d'un fluide réfrigérant sous forme d'un mélange, dans lequel un fluide réfrigérant sous forme d'un mélange composé de trois ingrédients différents de fluide réfrigérant est produit par l'introduction successive de deux ingrédients quelconques choisis dans le groupe formé par le difluorométhane, le 1,1,1-trifluoréthane et le pentafluoréthane, avec du 1,1,1,2-tétrafluoréthane dans un réservoir, à son fond ou près de celui-ci, sous forme liquide, le procédé comprenant la sélection de l'ordre d'introduction des ingrédients du fluide réfrigérant afin que la masse volumique du dernier ingrédient du fluide réfrigérant à introduire parmi les deux ingrédients différents de fluide réfrigérant introduits à un stade initial, à la température d'introduction, est inférieure à la masse volumique du liquide de l'ingrédient du fluide réfrigérant déjà introduit dans le réservoir, la sélection de la pression de vapeur de l'ingrédient final du fluide réfrigérant à introduire ensuite afin que, à la température d'introduction, elle soit supérieure à la pression de vapeur de la phase liquide du groupe d'ingrédients de fluide réfrigérant déjà introduit dans le réservoir, et l'introduction de l'ingrédient (groupe) de fluide réfrigérant introduit ultérieurement dans la phase liquide de l'ingrédient (groupe) de fluide réfrigérant déjà introduit.

4. Procédé selon la revendication 1 ou 3, dans lequel les ingrédients (groupes) de fluide réfrigérant sont introduits dans le réservoir par au moins deux ouvertures ou par de fins trous poreux.

5. Procédé selon la revendication 1 ou 3, dans lequel la phase liquide dans le réservoir est agitée avec un circulateur à pompe ou un agitateur pendant et/ou après l'introduction des ingrédients (groupes) de fluide réfrigérant.

# Fig.1(a)

# Fig.1(b)

# Fig.2(a)

# Fig.2(b)

# Fig.3

# Fig.4

# Fig.5